# EUROPEAN PATENT APPLICATION

(11) **EP 4 207 087 A1**
(43) Date of publication of application: **05.07.2023**
(21) Application number: 22217154.8
(22) Date of filing: 29.12.2022
(51) Int. Cl.: G06T 19/00, G06F 3/048

(54) **METHOD AND SYSTEM FOR CREATING AND STORING MAP TARGETS**

(30) Priority: 30.12.2021 KR 20210193373
(71) Applicant: Virnect, Co., Ltd., Seoul 04379 (KR)
(72) Inventor: KIM, Ki Young, 04379 Seoul (KR); PARK, Noh Young, 10867 Paju-si, Gyeonggi-do (KR)
(74) Representative: BCKIP Part mbB

(57) **Abstract**

A method of creating and storing a map target according to one embodiment of the present disclosure, which creates and stores the map target through a map target application executed by at least one processor of a mobile terminal, includes: creating a 3D map based on an image obtained by photographing a 3D space; determining an authoring space in which a virtual object authoring work is to be performed based on the created 3D map; setting reference coordinates based on a target object in the determined authoring space; providing a virtual object authoring interface for performing the virtual object authoring work based on the set reference coordinates; and mapping a virtual object authored through the provided virtual object authoring interface to the target object and storing the virtual object mapped to the target object.

## Description

### CROSS-REFERENCE TO RELATED APPLICATIONS

This Application claims the benefit of Koran Patent Application No. 10-2021-0193373, filed on December 30, 2021 before the Korean Intellectual Property Office.

### Technical Field

The present disclosure relates to a method and system for creating and storing a map target. More specifically, the present disclosure relates to a method and system for creating and storing a map target which dynamically sets reference coordinates in a 3D space based on a 3D map.

### Related Art

Modern computing and display technologies often require representations of three-dimensional (3D) space, and enable the development of systems for so-called "Virtual Reality (VR)" or "Augmented Reality (AR)" experiences on this basis.

In order to create a 3D virtual space for a real space that has not been modeled in advance, a user needs to acquire image feature (camera posture information) for the real space using a camera, create local reference coordinates or adjustment coordinates, and then adjust the coordinates of the virtual space based on this.

However, since the adjustment coordinates are conventionally created at an arbitrary position (e.g., an initial position of the camera, etc.), it is quite inconvenient to perform tasks such as authoring a virtual object in the corresponding 3D virtual space based on the corresponding coordinates.

That is, when the user intends to execute various functional operations (e.g., virtual object rotation, frame viewpoint switching, etc.) based on the coordinates advantageous to the space in which a virtual object authoring work and the like are performed, conventionally, there are difficulties such as having to follow the coordinates arbitrarily set for the corresponding 3D virtual space or manually setting desired coordinates.

Specifically, when the user performs the above virtual object authoring work using a mobile computing device, since it is more affected by the reference coordinates, the demand for technology that can easily provide coordinates optimized for a user's 3D workspace is being increased.

Meanwhile, a 3D map representing such a 3D virtual space is mainly implemented using a map target, that is, a simultaneous localization and mapping (SLAM) algorithm.

Specifically, the SLAM algorithm refers to an algorithm through which while moving in an arbitrary 3D space whose information is not known, a computing device (e.g., robot, etc.) including a camera senses the surrounding 3D space environment using a given sensor, creates a map of the corresponding 3D space based on the sensed information, and estimates the current location.

Using the 3D map created in this way, the current location in a 3D space can be grasped or various functional operations for a specific object existing in the 3D space (e.g., augmented reality content output and/or a predetermined waypoint designation, etc.) can be implemented.

### SUMMARY

The present disclosure provides a method and system for creating and storing a map target which dynamically sets reference coordinates in a 3D space based on a 3D map.

Specifically, the present disclosure provides a method and system for creating and storing a map target which dynamically sets the reference coordinates based on a target object detected from the 3D map.

In addition, the present disclosure provides a method and system for creating and storing a map target which supports a virtual object authoring work in the 3D space based on the 3D map based on the dynamically set reference coordinates.

However, the objects to be achieved by the present disclosure and the embodiments of the present disclosure are not limited to the objects described above, and other objects may exist.

A method of creating and storing a map target according to one embodiment of the present disclosure, which creates and stores a map target through a map target application executed by at least one processor of a mobile terminal, comprises: creating a 3D map based on an image obtained by photographing a 3D space; determining an authoring space in which a virtual object authoring work is to be performed based on the created 3D map; setting reference coordinates based on a target object in the determined authoring space; providing a virtual object authoring interface for performing the virtual object authoring work based on the set reference coordinates; and mapping a virtual object authored through the provided virtual object authoring interface to the target object and storing the virtual object mapped to the target object.

The method of creating and storing a map target according to one embodiment of the present disclosure further comprises: acquiring a target shooting image obtained by photographing the 3D space; detecting the target object in the acquired target shooting image; and augmenting and displaying a virtual object mapped to the detected target object on the target shooting image.

In this case, the 3D map includes at least one of a point cloud map image representing the 3D space based on a plurality of feature points detected from an image captured by photographing the 3D space, a frame image that is an image corresponding to the point cloud map image, and a point cloud frame image obtained by combining the point cloud map image and the frame image.

Further, the determining of the authoring space in which the virtual object authoring work is to be performed includes: setting the authoring space based on a user's input based on at least one of the point cloud map image and the frame image; and extracting an authoring space image representing the set authoring space.

Further, the authoring space image includes a plurality of feature points in the point cloud map image corresponding to the authoring space image and descriptor information for each of the feature points.

Further, the setting of the reference coordinates based on the target object in the authoring space includes: detecting a marker in the authoring space image as the target object; and setting a preset coordinate system for the detected marker as the reference coordinates.

Further, the setting of the reference coordinates based on the target object in the authoring space includes: acquiring a user's input that selects at least one pixel in the authoring space image as the target object; setting a center point of the at least one selected pixel as the origin of the reference coordinates; and setting the Z-axis of the reference coordinates by detecting a normal vector for the at least one pixel based on the descriptor corresponding to the selected at least one pixel.

Further, the setting of the reference coordinates based on the target object in the authoring space includes providing a modification interface for changing at least one of an origin and an axis of the reference coordinates set based on the target object according to a user's input.

The method of creating and storing a map target according to one embodiment of the present disclosure further comprises: mapping and storing the virtual object authored through the provided virtual object authoring interface to 3D spatial coordinates of the 3D map; acquiring a target shooting image obtained by photographing the 3D space; detecting the 3D spatial coordinates in the acquired target shooting image; and augmenting and displaying a virtual object mapped to the detected 3D spatial coordinates on the target shooting image.

A system for creating and storing a map target according to one embodiment of the present disclosure comprises: at least one display for outputting a 3D map; at least one memory; at least one processor; and at least one application stored in the memory and executed by the processor to create and store a map target, wherein the at least one application is operated to: create a 3D map based on an image of a 3D space; determine an authoring space in which a virtual object authoring work is to be performed based on the created 3D map; set reference coordinates based on a target object in the determined authoring space; provide a virtual object authoring interface for performing the virtual object authoring work based on the set reference coordinates; and map a virtual object authored through the provided virtual object authoring interface to the target object and store the virtual object mapped to the target object.

In the method and system for creating and storing a map target according to one embodiment of the present disclosure, by dynamically setting the reference coordinates in the 3D space based on the 3D map based on the target object detected from the 3D map, various functional operations (e.g., virtual object rotation, frame viewpoint switching, etc.) can be executed based on customized coordinates advantageous for performing works such as virtual object authoring on a specific workspace in the 3D space without a separate setting.

In addition, in the method and system for creating and storing a map target according to one embodiment of the present disclosure, by supporting a virtual object authoring operation in the 3D space based on the 3D map based on the dynamically set reference coordinates, it is possible to provide customized coordinates that support various functional operations for the virtual object authoring work to operate more intuitively in the corresponding workspace. Through this, the convenience of a user interface for authoring the virtual object can be improved.

However, the effects obtainable in the present disclosure are not limited to the effects mentioned above, and other effects not mentioned may be clearly understood from the following description.

### BRIEF DESCRIPTION OF THE DRAWINGS

FIG. 1 is a conceptual diagram of a system for creating and storing a map target according to one embodiment of the present disclosure.
FIG. 2 is an internal block diagram of a mobile terminal according to one embodiment of the present disclosure.
FIG. 3 is a flowchart illustrating a method of creating and storing a map target according to one embodiment of the present disclosure.
FIG. 4 is an example of a diagram for explaining a 3D map according to one embodiment of the present disclosure.
FIG. 5 is an example of a diagram for explaining marker-based anchoring according to one embodiment of the present disclosure.
FIG. 6 is an example of a diagram for explaining markerless anchoring according to one embodiment of the present disclosure.
FIG. 7 is an example of a diagram for explaining a virtual object authoring interface based on reference coordinates according to one embodiment of the present disclosure.
FIG. 8 is an example of a diagram for explaining a method of providing a virtual object authored through a virtual object authoring interface according to one embodiment of the present disclosure.

### DESCRIPTION OF EXEMPLARY EMBODIMENTS

Various modifications may be made to the present disclosure, and the present disclosure may have various embodiments, so specific embodiments of the present disclosure will be illustrated in the drawings and described in detail in the detailed description. Effects and features of the present disclosure, and methods for achieving them will become clear with reference to the embodiments described below in detail together with the drawings. However, the present disclosure is not limited to the embodiments disclosed below and may be implemented in various forms. In the following embodiments, terms such as first and second are used for the purpose of distinguishing one component from another component rather than limiting meaning. Further, the singular expression include plural expressions unless the context clearly indicates otherwise. In addition, terms such as comprise, include or have mean that features or component described in the specification exist, and do not preclude the possibility that one or more other features or components may be added. Furthermore, in the drawings, the size of components may be exaggerated or reduced for convenience of description. For example, since the size and thickness of each component shown in the drawings are arbitrarily shown for convenience of explanation, the present disclosure is not necessarily limited to the illustration.

Hereinafter, embodiments of the present disclosure will be described in detail with reference to the accompanying drawings, and when described with reference to the drawings, the same or corresponding components are given the same reference numerals, and redundant descriptions thereof will be omitted.

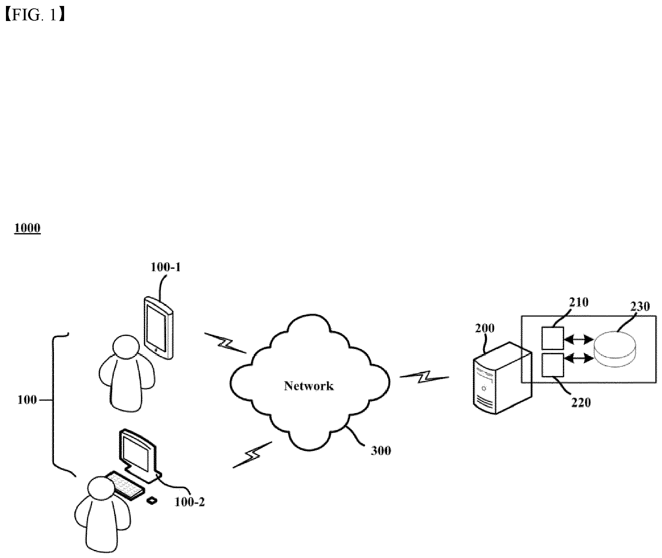

FIG. 1 is a conceptual diagram of a system for creating and storing a map target according to one embodiment of the present disclosure.

Referring to FIG. 1, a map target creating and storing system 1000 according to one embodiment of the present disclosure may provide a map target creating and storing service that dynamically sets reference coordinates in a 3D space based on a 3D map.

In one embodiment, the map target creating and storing system 1000, which provides the map target creating and storing service, may include a mobile terminal 100, a database server 200, and a network 300.

In this case, the mobile terminal 100 and the database server 200 may be connected through the network 300.

Here, the network 300 according to the embodiment refers to a connection structure capable of exchanging information between nodes such as the mobile terminal 100 and/or the database server 200, and examples of the network 300 include a 3rd generation partnership project (3GPP) network, a long term evolution (LTE) network, a world interoperability for microwave access (WIMAX) network, the Internet, a local area network (LAN), and a wireless local area network (Wireless LAN)), a wide area network (WAN), a personal area network (PAN), a Bluetooth network, a satellite broadcasting network, an analog broadcasting network, a digital multimedia broadcasting (DMB) network, and the like, but are not limited thereto.

Hereinafter, the mobile terminal 100 and the database server 200 implementing the map target creating and storing system 1000 will be described in detail with reference to the accompanying drawings.

### (Mobile terminal 100)

The mobile terminal 100 according to one embodiment of the present disclosure may be a computing device in which a map target application (hereinafter, referred to as application) for providing a map target creating and storing service is installed.

Specifically, from a hardware point of view, the mobile terminal 100 may include a mobile type computing device 100-1 in which the application is installed.

Here, the mobile type computing device 100-1 may be a mobile device such as a smartphone or a tablet PC in which the application is installed.

For example, the mobile type computing device 100-1 may include a smartphone, a mobile phone, a digital broadcasting device, a personal digital assistant (PDA), a portable multimedia player (PMP), a tablet PC, and the like.

Meanwhile, depending on embodiments, the mobile terminal 100 may include a desktop type computing device 100-2.

In this case, the desktop type computing device 100-2 may include a device in which a program for executing the map target creating and storing service based on wired/wireless communication is installed, for example, a personal computer, such as a fixed desktop PC, a laptop computer, or an ultrabook, in which the application is installed.

Further, depending on embodiments, the mobile terminal 100 may further include a server computing device that provides a map target creating and storing service environment.

Hereinafter, in the embodiment of the present disclosure, it will be described that the mobile terminal 100 is implemented based on the aforementioned mobile type computing device 100-1, but is not limited thereto.

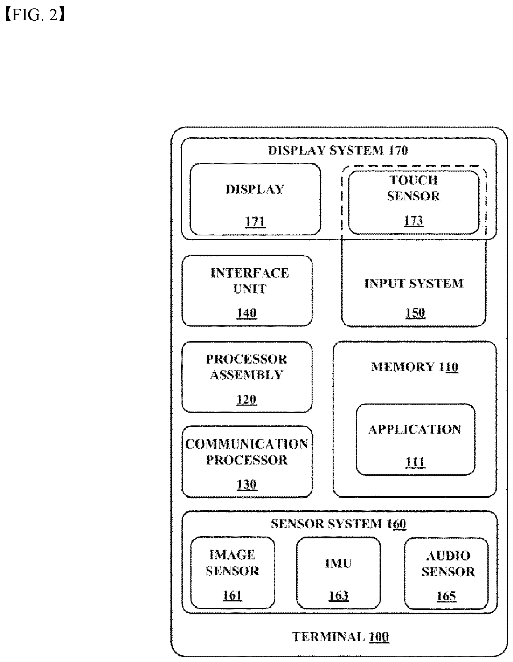

FIG. 2 is an internal block diagram of the mobile terminal 100 according to one embodiment of the present disclosure.

Referring to FIG. 2, from a functional point of view, the mobile terminal 100 may include a memory 110, a processor assembly 120, a communication processor 130, an interface unit 140, an input system 150, a sensor system 160, and a display system 170. These components may be configured to be included in a housing of the mobile terminal 100.

Specifically, an application 111 is stored in the memory 110, and the application 111 may store one or more of various application programs, data, and instructions for providing a map target creating and storing service environment.

That is, the memory 110 may store instructions and data that may be used to create the map target creating and storing service environment.

Furthermore, the memory 110 may include a program area and a data area.

Here, the program area according to the embodiment may be linked between an operating system (OS) for booting the mobile terminal 100 and functional elements, and the data area may store data generated according to the use of the mobile terminal 100.

In addition, the memory 110 may include at least one non-transitory computer-readable storage medium and a transitory computer-readable storage medium.

For example, the memory 110 may be various storage devices such as ROM, EPROM, flash drive, hard drive, and the like, and may include a web storage that performs the storage function of the memory 110 on the Internet.

The processor assembly 120 may include at least one processor capable of executing instructions of the application 111 stored in the memory 110 to perform various works for creating the map target creating and storing service environment.

In one embodiment, the processor assembly 120 may control overall operations of components through the application 111 of the memory 110 to provide the map target creating and storing service.

The processor assembly 120 may be a system on chip (SOC) suitable for the mobile terminal 100 including a central processing unit (CPU) and/or a graphics processing unit (GPU), and may execute the operating system (OS) and/or application programs stored in the memory 110, and control each component mounted to the mobile terminal 100.

In addition, the processor assembly 120 may internally communicate with each component through a system bus, and may include one or more bus structures including a local bus.

Further, the processor assembly 120 may be implemented to include at least one of ASICs (application specific integrated circuits), DSPs (digital signal processors), DSPDs (digital signal processing devices), PLDs (programmable logic devices), FPGAs (field programmable gate arrays), controllers, micro-controllers, microprocessors, and electrical units for performing other functions.

The communication processor 130 may include one or more devices for communicating with an external device. The communication processor 130 may perform communications through a wireless network.

Specifically, the communication processor 130 may communicate with a computing device that stores a content source for implementing the map target creating and storing service environment, and may communicate with various user input components such as a controller that receives a user input.

In one embodiment, the communication processor 130 may transmit and receive various data related to the map target creating and storing service to and from another mobile terminal 100, and/or an external server.

The communication processor 130 may wirelessly transmit and receive data to and from at least one of a base station, an external mobile terminal 100, and an arbitrary server on a mobile communication network established through a communication system that can perform technical standards or communication methods for mobile communication (e.g., LTE (Long Term Evolution), LTE-A (Long Term Evolution-Advanced), 5G NR (New Radio), and WIFI), or short-range communication method.

The sensor system 160 may include various sensors such as an image sensor 161, a position sensor (IMU) 163, an audio sensor 165, a distance sensor, a proximity sensor, and a contact sensor.

In this case, the image sensor 161 may capture an image and/or video of a physical space around the mobile terminal 100.

In one embodiment, the image sensor 161 may capture and acquire an image (e.g., a captured video) related to the map target creating and storing service.

In addition, the image sensor 161 may be disposed on a front surface or/and a rear surface of the mobile terminal 100 to acquire an image captured by photographing the side on which the image sensor 161 is disposed, and may photograph the physical space through a camera disposed on the mobile terminal 100 to be directed outward.

The image sensor 161 may include an image sensor device and an image processing module. Specifically, the image sensor 161 may process still images or moving images captured by the image sensor device (e.g., CMOS or CCD).

Further, the image sensor 161 may extract necessary information by processing a still image or moving image acquired through the image sensor device using the image processing module, and transmit the extracted information to the processor.

The image sensor 161 may be a camera assembly including one or more cameras. The camera assembly may include a general camera that captures a visible light band, and may further include a special camera such as an infrared camera, a stereo camera, or the like.

Furthermore, depending on embodiments, the image sensor 161 as described above may be included and operated in the mobile terminal 100, or included in an external device (e.g., an external server, etc.) and operated through interworking with the communication processor 130 and/or the interface unit 140.

The position sensor (IMU) 163 may detect at least one of motion and acceleration of the mobile terminal 100. For example, the position sensor (IMU) 163 may be made of a combination of various position sensors such as an accelerometer, a gyroscope, and a magnetometer.

In addition, the position sensor (IMU) 163 may recognize spatial information about a physical space around the mobile terminal 100 by interworking with a location communication processor 130 such as a GPS of the communication processor 130.

The audio sensor 165 may recognize sounds around the mobile terminal 100.

Specifically, the audio sensor 165 may include a microphone capable of detecting a voice input of a user using the mobile terminal 100.

In one embodiment, the audio sensor 165 may receive voice data required for the map target creating and storing service from the user.

The interface unit 140 may communicatively connect the mobile terminal 100 with one or more other devices. Specifically, the interface unit 140 may include a wired and/or wireless communication device compatible with one or more different communication protocols.

Through the interface unit 140, the mobile terminal 100 may be connected to various input/output devices.

For example, the interface unit 140 may be connected to an audio output device such as a headset or a speaker to output audio.

Although it has been described that the audio output device is connected to the mobile terminal 100 through the interface unit 140 as an example, the audio output device may be installed in the mobile terminal 100 depending on embodiments.

In addition, for example, the interface unit 140 may be connected to an input device such as a keyboard and/or a mouse to acquire a user input.

Although it has been described that the keyboard and/or the mouse are connected to the mobile terminal 100 through the interface unit 140 as an example, the keyboard and/or the mouse may be installed in the mobile terminal 100 depending on embodiments.

The interface unit 140 may include at least one of a wired/wireless headset port, an external charger port, a wired/wireless data port, a memory card port, a port for connection with a device equipped with an identification module, an audio I/O (input/output) port, a video I/O (input/output) port, an earphone port, a power amplifier, an RF circuit, a transceiver, and other communication circuits.

The input system 150 may detect a user's input (e.g., gestures, voice commands, button manipulations, or other types of input) related to the map target creating and storing service.

Specifically, the input system 150 may include a button, a touch sensor, and/or an image sensor 161 that receives a user's motion input.

In addition, the input system 150 may be connected to an external controller through the interface unit 140 to receive a user's input.

The display system 170 may output various information related to the map target creating and storing service as a graphic image.

As an example, the display system 170 may display a captured image, a 3D map, an authoring space image, a target object, reference coordinates, a virtual object, and/or various user interfaces.

The display system 170 may include at least one of a liquid crystal display (LCD), a thin film transistor-liquid crystal display (TFT LCD), an organic light-emitting diode (OLED), a flexible display, a 3D display, and an electronic ink display (e-ink display).

Here, the user interface of the mobile terminal 100 may include a touch sensor 173 on a display 171 configured to receive a user's touch input.

Specifically, the display system 170 may include a display 171 for outputting an image, and a touch sensor 173 for detecting a user's touch input.

For example, the display 171 may be implemented as a touch screen in which the display 171 is formed in a layered structure with the touch sensor 173 or integrally with the touch sensor 173. The touch screen may function as a user input unit that provides an input interface between the mobile terminal 100 and the user, and may provide an output interface between the mobile terminal 100 and the user.

Meanwhile, the mobile terminal 100 according to one embodiment of the present disclosure may perform various functional operations required for the map target creating and storing service using at least one disclosed algorithm.

As an example, the mobile terminal 100 may perform feature point detection functional operations required for the map target creating and storing service based on algorithms such as FastFeatureDetector, MSER, SimpleBlobDetector, and/or GFTTDetector.

In addition, depending on embodiments, the mobile terminal 100 may further perform at least a part of functional operations performed by the database server 200 to be described later.

### (Database server 200)

Meanwhile, the database server 200 according to one embodiment of the present disclosure may perform a series of processes for providing the map target creating and storing service.

Specifically, in one embodiment, the database server 200 may provide the map target creating and storing service by exchanging, with an external device such as the mobile terminal 100, data necessary for driving a map target creating and storing process which dynamically sets reference coordinates in a 3D space based on a 3D map in the external device such as the mobile terminal 100.

More specifically, in one embodiment, the database server 200 may provide an environment in which the application 111 can operate in an external device (the mobile terminal 100 in the embodiment).

To this end, the database server 200 may include an application program, data, and/or instructions for operation of the application 111, and may transmit and receive data based thereon to and from the external device.

In addition, in one embodiment, the database server 200 may determine an authoring space in which augmented reality (AR) work is performed in a map target.

Here, the map target according to the embodiment may mean a program that analyzes key frames of a captured image taken by photographing an arbitrary 3D space to recognize the corresponding 3D space, and provides a 3D map created based thereon.

Further, in one embodiment, the database server 200 may set reference coordinates by executing an anchoring interface based on the determined authoring space.

The anchoring interface according to the embodiment may refer to a user interface capable of setting reference coordinates when authoring a virtual object in a 3D space based on the 3D map.

In this case, the reference coordinates according to the embodiment may determine an origin coordinate and directions of the X, Y, and Z axes when the virtual object is authored based on the 3D map.

In addition, in one embodiment, the database server 200 may provide a virtual object authoring interface based on the set reference coordinates.

The virtual object authoring interface according to the embodiment may refer to a user interface capable of authoring a virtual object in a 3D space based on the 3D map.

Further, in one embodiment, the database server 200 may generate virtual object mapping information by mapping a virtual object authored through the provided virtual object authoring interface to a reference target.

The virtual object mapping information according to the embodiment may be information obtained by mapping the authored virtual object to a reference target including at least one of a marker, a reference object, and/or 3D spatial coordinates in the 3D map, and a detailed description of this will be described later.

Further, in one embodiment, the database server 200 may obtain a target shooting image obtained by photographing a 3D space.

In addition, in one embodiment, the database server 200 may detect a reference target in the acquired target shooting image.

In other words, the reference target according to the embodiment may mean a marker, a reference object, and/or 3D spatial coordinates to which the virtual object is mapped.

In addition, in one embodiment, the database server 200 may augment and display the virtual object mapped to the detected reference target on the target shooting image, and provide the augmented virtual object.

Further, in one embodiment, the database server 200 may perform a functional operation required for the map target creating and storing service using at least one disclosed algorithm.

As an example, the database server 200 may perform various feature point detection functional operations required for the map target creating and storing service based on algorithms such as FastFeatureDetector, MSER, SimpleBlobDetector, and/or GFTTDetector.

Specifically, in one embodiment, the database server 200 may read an algorithm driving program built to perform the above functional operations from a memory module 230, and perform a corresponding function operation according to the read algorithm system.

In this case, depending on embodiments, the above-described algorithm may be directly included in the database server 200 or implemented in a device and/or server separate from the database server 200 to perform a functional operation for the map target creating and storing service.

In the following description, it is described that the algorithm is included and implemented in the database server 200, but the present disclosure is not limited thereto.

In addition, in one embodiment, the database server 200 may store and manage various application programs, instructions, and/or data for implementing the map target creating and storing service.

As an example, the database server 200 may store and manage one or more captured images, 3D maps, key frames, authoring space images, target objects, reference coordinates, virtual objects, and various user interfaces and/or algorithms required for the map target creating and storing service.

Meanwhile, further referring to FIG. 1, in one embodiment, the database server 200 may be implemented as a computing device including at least one processor module 210 for data processing, at least one communication module 220 for data exchange with an external device, and at least one memory module 230 storing various application programs, data and/or instructions for providing the map target creating and storing service.

In this case, the memory module 230 may store one or more of an operating system (OS), various application programs, data, and instructions for providing the map target creating and storing service.

Further, the memory module 230 may include a program area and a data area.

In this case, the program area according to one embodiment may be linked between the operating system (OS) for booting the server and functional elements, and the data area may store data generated according to the use of the server.

In one embodiment, the memory module 230 may be a variety of storage devices such as ROM, RAM, EPROM, flash drive, hard drive, and the like, and may be a web storage that performs the storage function of the memory module 230 on the Internet.

Further, the memory module 230 may be a recording medium attachable to and detachable from the server.

Meanwhile, the processor module 210 may control the overall operation of each unit described above to implement the map target creating and storing service.

The processor module 210 may be a system on chip (SOC) suitable for the server including a central processing unit (CPU) and/or a graphics processing unit (GPU), and may execute the operating system (OS) and/or application programs stored in the memory module 230 and control each component mounted to the server.

In addition, the processor module 210 may internally communicate with each component through a system bus, and may include one or more bus structures including a local bus.

Further, the processor module 210 may be implemented by using at least one of ASICs (application specific integrated circuits), DSPs (digital signal processors), DSPDs (digital signal processing devices), PLDs (programmable logic devices), FPGAs (field programmable gate arrays), controllers, micro-controllers, microprocessors, and other electrical units for performing functions.

In the above description, it has been described that the database server 200 according to one embodiment of the present disclosure performs the functional operations as described above, but depending on embodiments, at least a part of the functional operations performed by the database server 200 may be performed by an external device (e.g., the mobile terminal 100, etc.), or at least a part of the functional operations performed in the external device may be further performed in the database server 200.

### (Method of creating and storing a map target)

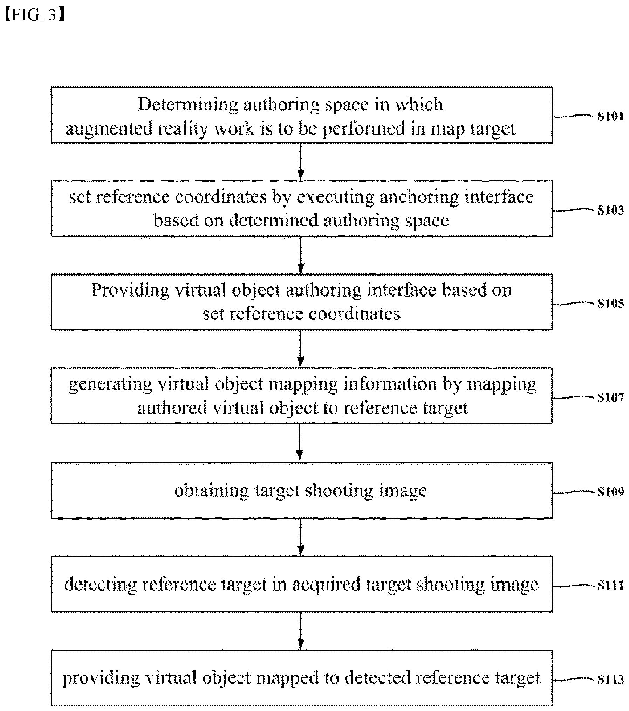

Hereinafter, a method of creating and storing a map target, which dynamically sets reference coordinates in a 3D space based on a 3D map, through the application 111 executed by at least one processor of the mobile terminal 100 according to one embodiment of the present disclosure will be described in detail with reference to FIGS. 3 to 8.

In one embodiment of the present disclosure, at least one processor of the mobile terminal 100 may execute at least one application 111 stored in at least one memory 110 or operate in a background state.

Hereinafter, it is briefly described as being performed by the application 111 that the at least one processor operates to execute instructions of the application 111 and perform the map target creating and storing method.

FIG. 3 is a flowchart illustrating the map target creating and storing method according to one embodiment of the present disclosure.

Referring to FIG. 3, in one embodiment, the application 111 executed by at least one processor of the mobile terminal 100 or operating in a background state may determine an authoring space in which augmented reality (AR) work is to be performed in the map target (S101).

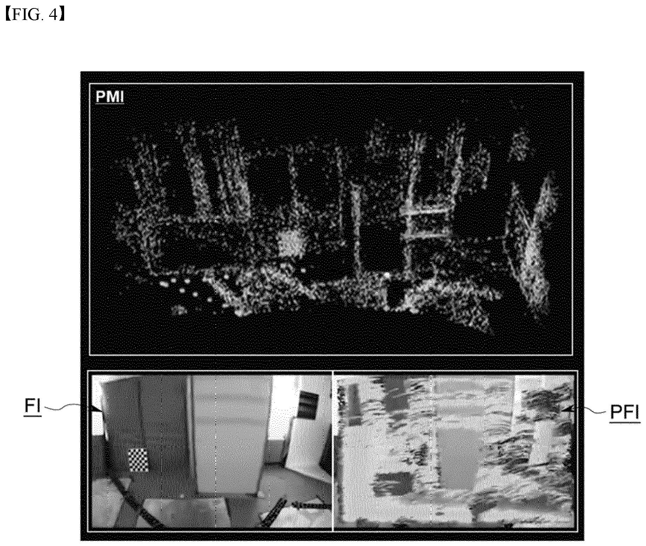

FIG. 4 is an example of a diagram for explaining a 3D map according to one embodiment of the present disclosure.

Referring to FIG. 4, the map target according to the embodiment may mean a program that analyzes key frames of a captured image taken by photographing an arbitrary 3D space to recognize the corresponding 3D space, and provides a 3D map created based thereon.

Specifically, in one embodiment, the application 111 may create a 3D map in the map target.

More specifically, in one embodiment, the application 111 may extract at least one key frame that is a core frame by a predetermined criterion (e.g., predetermined interval and/or predetermined change detection) among all frames constituting the captured image.

In addition, in one embodiment, the application 111 may detect a plurality of feature points in the key frame in conjunction with a feature detector.

Here, the feature detector according to the embodiment may detect a feature (e.g., edge and/or corner, etc.) point in the key frame as the feature point.

In this case, the feature detector may also calculate a descriptor capable of specifying each of the detected feature points for each feature point.

For reference, the descriptor is obtained by dividing pixels around a corresponding feature point into blocks of a certain size and calculating a gradient histogram of pixels belonging to each block, and may mainly include 3D spatial coordinate information (in the embodiment, normal vector and/or 6 degrees of freedom (6 DoF), etc.), and information such as brightness, color, direction, and/or size around the feature point.

The feature detectors may be implemented based on algorithms such as FastFeatureDetector, MSER, SimpleBlobDetector, and/or GFTTDetector, for example. However, these are only examples and the present disclosure is not limited thereto.

In this case, in one embodiment, the application 111 may store and manage the detected feature points by matching the feature points with the respective descriptors for them.

In addition, in one embodiment, the application 111 may create a 3D map by mapping the plurality of detected feature points onto 3D spatial coordinates.

Specifically, in one embodiment, the application 111 may create a 3D map according to the 3D spatial coordinates by mapping each of the plurality of feature points detected from the key frames with a posture (e.g., position and/or orientation information) of the sensor at the time when the sensor acquires the corresponding key frame.

In this case, the 3D map according to the embodiment may include a point cloud map image PMI representing the corresponding 3D space based on the plurality of feature points, a frame image FI that is a captured image corresponding to the point cloud map image PMI, and a point cloud frame image PFI obtained by combining the point cloud map image PMI and the frame image FI.

In this case, the point cloud frame image PFI according to the embodiment may further include and display a plurality of feature points in the point cloud map image PMI on the frame image FI.

In addition, in one embodiment, the application 111 may determine an authoring space in which an augmented reality (AR) work is to be performed based on the 3D map created as described above.

Specifically, in one embodiment, the application 111 may determine the authoring space based on a user input based on the point cloud map image PMI (hereinafter, referred to as a point map image).

More specifically, the application 111 may acquire a user input (e.g., drag and/or touch input, etc.) for selecting the point map image PMI at a specific time point.

In addition, the application 111 may extract the frame image FI corresponding to the point map image PMI selected according to the acquired user input.

In this case, the extracted frame image FI may include information on a plurality of feature points (including descriptors) included in the point map image PMI corresponding to the corresponding frame image FI.

In addition, the application 111 may determine the 3D space for the extracted frame image FI as the authoring space.

Alternatively, depending on embodiments, the application 111 may determine the authoring space according to on a user input based on the frame image FI.

Specifically, the application 111 may acquire a user input (e.g., drag and/or click input, etc.) for selecting the frame image FI at a specific time point.

In addition, the application 111 may determine the 3D space for the frame image FI selected according to the acquired user input as the authoring space.

In this case, similarly, the selected frame image FI may include information on a plurality of feature points (including descriptors) included in the point map image PMI corresponding to the corresponding frame image FI.

Further, in one embodiment, the application 111 may set reference coordinates by executing the anchoring interface based on the determined authoring space (S103).

In this case, the anchoring interface according to the embodiment may refer to a user interface capable of setting reference coordinates when authoring a virtual object in a 3D space based on the 3D map.

In this case, the reference coordinates according to the embodiment may determine an origin coordinate and directions of the X, Y, and Z axes when the virtual object is authored based on the 3D map.

Specifically, in one embodiment, the application 111 may display a frame image FI (hereinafter, referred to as authoring space image) for the determined authoring space based on the anchoring interface.

Further, in one embodiment, the application 111 may detect a target object from the displayed authoring space image.

In this case, the target object according to the embodiment may mean an object used as a reference when setting the above-described reference coordinates, and in one embodiment, the target object may be a preset marker and/or a reference object (in the embodiment, at least one pixel) according to an user input.

In addition, in one embodiment, the application 111 may perform anchoring to set reference coordinates when authoring a virtual object in the 3D space based on the 3D map based on the detected target object.

More specifically, in a first embodiment, the application 111 may perform marker-based anchoring based on the displayed anchoring space image.

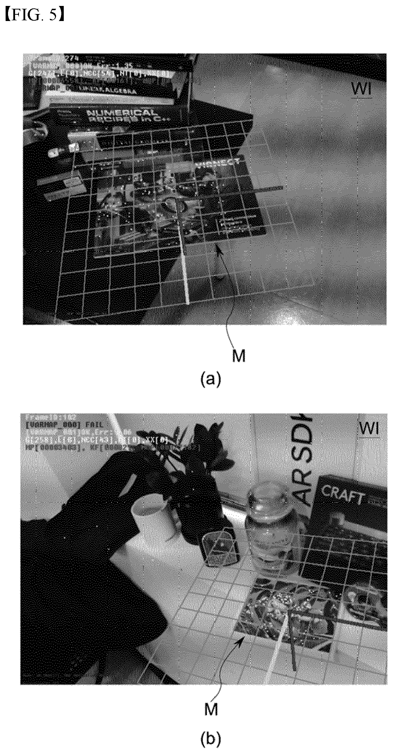

FIG. 5 is an example of a diagram for explaining the marker-based anchoring according to one embodiment of the present disclosure.

Specifically, referring to FIG. 5, in the present embodiment, the application 111 may 1) detect a pre-stored marker M in the displayed anchoring space image WI.

As an example, the application 111 may perform image analysis, such as object detection and/or image segmentation based on the anchoring space image WI, and detect a marker M (e.g., a two-dimensional identification code, etc.) in the anchoring space image WI.

In addition, in the present embodiment, the application 111 may 2) set reference coordinates based on the detected marker M.

Specifically, the application 111 may read preset default coordinates for the detected marker M from the memory 110 and set the read default coordinates as the reference coordinates.

In this case, depending on embodiments, when a marker M is detected from the authoring space image WI, the application 111 may automatically read the default coordinates for the marker M and set them as the reference coordinates, or when acquiring a user's selection input for the marker M is obtained, may read the default coordinates for the marker M and set them as the reference coordinates.

That is, in the first embodiment, the application 111 may learns a coordinate system that is easy to recognize a direction in advance, match it to a marker M, and store it as default coordinates. Then, when the marker M of is detected, the application 111 may perform anchoring in which the default coordinates matched to the detected marker M are read and set as the reference coordinates.

In this way, the application 111 locates a preset marker M on a 3D space, and when the corresponding marker M is detected from the authoring space image WI determined based on the 3D space, sets a coordinate system preset for the marker M as the reference coordinates, so that the application 111 enables a virtual object authoring work in the authoring space by utilizing a preset default coordinate system that matches the marker M in the corresponding authoring space later and supports various functional operations performed in the authoring space to be more conveniently implemented.

Further, in the present embodiment, the application 111 may 3) provide a modification interface for the set reference coordinates.

Specifically, the application 111 may change the origin and/or the axis of the set reference coordinates according to a user input through the provided modification interface.

More specifically, the application 111 may display the set reference coordinates on the authoring space image WI.

In addition, the application 111 may change the origin of the reference coordinates according to a user input (e.g., touch input, etc.) that selects a specific point in the marker M detected from the authoring space image WI.

In this case, the application 111 may change the direction of the X-axis and/or the Y-axis of the reference coordinates while the Z-axis of the reference coordinates is fixed.

Further, the application 111 may change the axis direction of the reference coordinates according to a user input (e.g., touch and drag input, etc.) that moves the direction of the axis of the reference coordinates displayed on the authoring space image WI.

As an example, the application 111 may perform the change of the direction of the X-axis and/or the Y-axis according to the user input based on the fixed Z-axis of the reference coordinates.

In this way, by allowing the preset reference coordinates in the authoring space including the corresponding marker M to be freely adjusted according to the user's needs, the application 111 can enhance the optimization of the reference coordinates for the corresponding authoring space and further improve the convenience of the virtual object authoring work.

Meanwhile, in a second embodiment, the application 111 may perform markerless anchoring based on the displayed authoring space image WI.

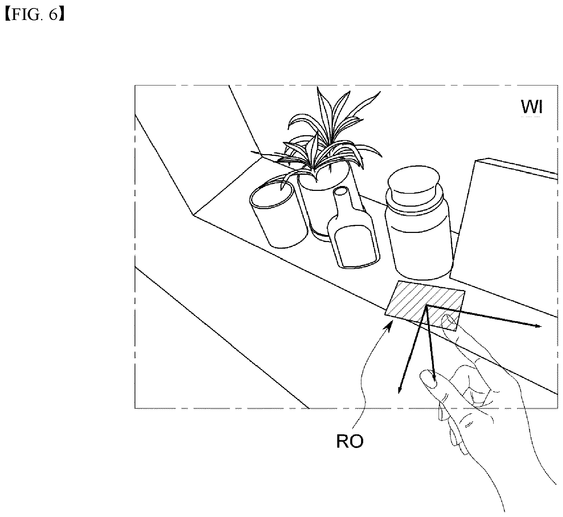

FIG. 6 is an example of a diagram for explaining the markerless anchoring according to one embodiment of the present disclosure.

Specifically, referring to FIG. 6, in the present embodiment, the application 111 may 1) determine at least one pixel (and/or feature point) in the displayed authoring space image WI as a reference object RO.

More specifically, the application 111 may determine the reference object RO based on a user input that selects at least one pixel (and/or feature point) in the authoring space image WI.

In the above, it has been described that the reference object RO may be determined based on at least one pixel and/or feature point in that a feature point can be implemented based on a plurality of pixels, and hereinafter, it is described that the reference object RO is determined based on for effective explanation, but the present disclosure is not limited thereto.

In addition, in the present embodiment, the application 111 may 2) set the origin of the reference coordinates based on the determined reference object RO.

Specifically, the application 111 may detect a center point (i.e., center pixel) of the determined reference object RO.

Further, the application 111 may set the detected center point as the origin of the reference coordinates.

In addition, in the present embodiment, the application 111 may 3) set the Z-axis of the reference coordinates based on the determined reference object RO.

Specifically, the application 111 may detect a normal vector direction of at least one pixel included in the determined reference object RO.

As an example, the application 111 may detect the normal vector direction of the at least one pixel based on 3D spatial coordinate information included in a descriptor for the at least one pixel.

In addition, the application 111 may set the Z-axis direction of the reference coordinates based on the detected normal vector direction.

Further, in the present embodiment, the application 111 may 4) set the X-axis and Y-axis of the reference coordinates based on the set Z-axis.

Specifically, the application 111 may arbitrarily set the X-axis direction and the Y-axis direction of the reference coordinates based on the set Z-axis.

As an example, the application 111 may set the X-axis direction and the Y-axis direction to have preset default directions based on the Z-axis.

Alternatively, the application 111 may set the X-axis direction and the Y-axis direction based on the Z-axis as preset default directions depending on a specific viewpoint viewing the workspace image.

In this way, when the user designates a specific region (i.e., at least one pixel in the embodiment), in the authoring space, where the user desires to perform virtual object authoring, the application 111 can set reference coordinates in the corresponding authoring space based on a normal vector value of the designated region. Accordingly, the application 111 can easily and conveniently provide the reference coordinates optimized for the user's needs (i.e., the reference coordinates that supports easy implementation of various functional operations in the authoring space where the user desires to perform work (in the embodiment, various functional operations for virtual object authoring, etc.) merely when the user simply selects a specific area on the authoring space image WI based on the corresponding 3D space without performing a separate operation such as positioning a marker M in the 3D space in advance, and then enable a virtual object authoring process to be performed based thereon.

In addition, in the present embodiment, the application 111 may 5) provide a modification interface for the set reference coordinates.

Specifically, the application 111 may change the origin and/or the axis of the set reference coordinates according to a user input based on the provided modification interface.

More specifically, the application 111 may display the set reference coordinates on the authoring space image WI.

In addition, the application 111 may change the origin of the reference coordinates according to a user input (e.g., touch input, etc.) that selects a specific point in the marker M detected from the authoring space image WI.

Further, the application 111 may change the axis direction of the reference coordinates according to a user input (e.g., touch and drag input, etc.) that moves the direction of the axis of the reference coordinates displayed on the authoring space image WI.

In this case, the application 111 may change the direction of the X-axis and/or the Y-axis of the reference coordinates while the Z-axis of the reference coordinates is fixed.

As an example, the application 111 may perform the change of the direction of the X-axis and/or the Y-axis according to the user input based on the fixed Z-axis of the reference coordinates.

In this way, by allowing the user to freely adjust the reference coordinates set based on the reference object RO selected by the user as desired, the application 111 can further enhance the optimization of the reference coordinates for the corresponding authoring space and the convenience of the virtual object authoring work.

In the above, the embodiments have been separately described for effective explanation, but at least some of the embodiments may be organically combined and operated depending on embodiments.

In addition, in one embodiment, the application 111 may provide a virtual object authoring interface based on the set reference coordinates (S 105).

In this case, the virtual object authoring interface according to the embodiment may mean a user interface capable of authoring a virtual object in a 3D space based on the 3D map.

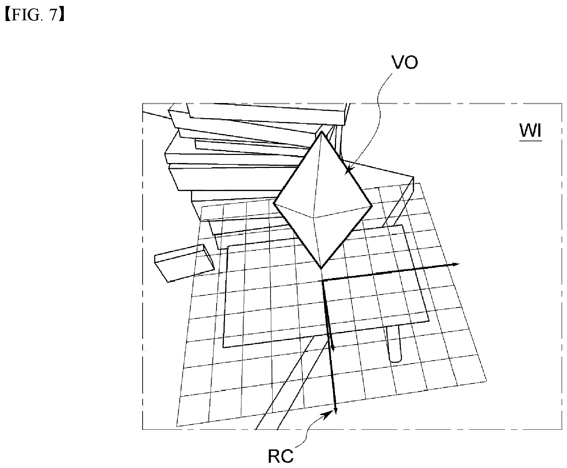

FIG. 7 is an example of a diagram for explaining the virtual object authoring interface based on the reference coordinates according to one embodiment of the present disclosure.

Specifically, referring to FIG. 7, in one embodiment, the application 111 may provide a virtual object authoring interface in which a user interface for authoring a virtual object VO operates based on the origin coordinate and the X-axis, Y-axis and Z-axis directions of the reference coordinates RC set as described above.

That is, in one embodiment, the application 111 may provide a virtual object authoring interface through which a preset function operation (e.g., rotation of the virtual object VO and/or change in viewpoint for the authoring space image WI, etc.) for a specific user input (e.g., drag and/or swipe input, etc.) when authoring the virtual object VO is performed based on the origin coordinate and the X-axis, Y-axis and Z-axis directions of the set reference coordinates RC.

For example, when acquiring a user input that selects and drags a virtual object VO through the virtual object VO authoring interface, the application 111 may perform an operation of rotating the selected virtual object VO in the dragging direction based on the reference coordinates RC.

As another example, when acquiring a user input that swipes an empty space in the corresponding authoring space image WI based on the virtual object authoring interface, the application 111 may perform an operation of changing the viewpoint for the authoring space image WI based on the reference coordinates RC.

In this way, the application 111 enables the virtual object authoring work to be implemented based on the reference coordinates RC dynamically determined by the preset marker M or the user's selection in the 3D space based on the 3D map, so that it is possible to provide a customized coordinate system that makes various functional operations required for authoring the corresponding virtual object VO (e.g., rotation of the virtual object VO and/or change in viewpoint for the authoring space image WI, etc.) operate more intuitively in a specific area in the 3D space where the user desires to perform the authoring of the virtual object VO, which enhances the usability and convenience of the virtual object authoring interface.

In addition, in one embodiment, the application 111 may generate virtual object mapping information by mapping the virtual object VO authored through the provided virtual object authoring interface to a reference target (S 107).

In this case, the virtual object mapping information according to the embodiment may refer to information obtained by mapping the authored virtual object VO to the reference target including at least one of the marker M, the reference object RO and/or the 3D spatial coordinates in the 3D map.

Specifically, in one embodiment, the application 111 may 1) generate virtual object mapping information by mapping the authored virtual object VO to a target object.

In other words, in one embodiment, the target object may mean a marker M and/or a reference object RO (in the embodiment, at least one pixel), which become a reference when setting the above-described reference coordinates RC.

That is, in one embodiment, the application 111 may map the authored virtual object VO to the above-described marker M and/or reference object RO, and may create the virtual object mapping information therefor.

Alternatively, in another embodiment, the application 111 may 2) generate virtual object mapping information by mapping the authored virtual object VO to 3D spatial coordinates.

Specifically, in the present embodiment, the application 111 may detect 3D spatial coordinates of the authored virtual object VO set through the reference coordinates RC.

In addition, the application 111 may map the created virtual object VO to the detected 3D spatial coordinates, and may generate virtual object VO mapping information therefor.

In the above, the embodiments have been separately described for effective explanation, but at least some of the embodiments may be organically combined and operated depending on embodiments.

Further, in one embodiment, the application 111 may obtain a target shooting image (S109).

Specifically, in one embodiment, the application 111 may acquire a target shooting image captured by photographing a 3D space by interworking with the image sensor 161 and/or the database server.

In addition, in one embodiment, the application 111 may detect a reference target in the acquired target shooting image (S111).

In this case, in other words, the reference target according to the embodiment may mean a target object (i.e., a marker M and/or a reference object RO in the embodiment) to which the virtual object VO is mapped and/or 3D spatial coordinates (hereinafter, referred to as target spatial coordinates).

Specifically, in one embodiment, the application 111 may detect the above-described reference target (i.e., target object and/or target spatial coordinates) from the acquired target shooting image.

Further, in one embodiment, the application 111 may provide a virtual object VO mapped to the detected reference target (S113).

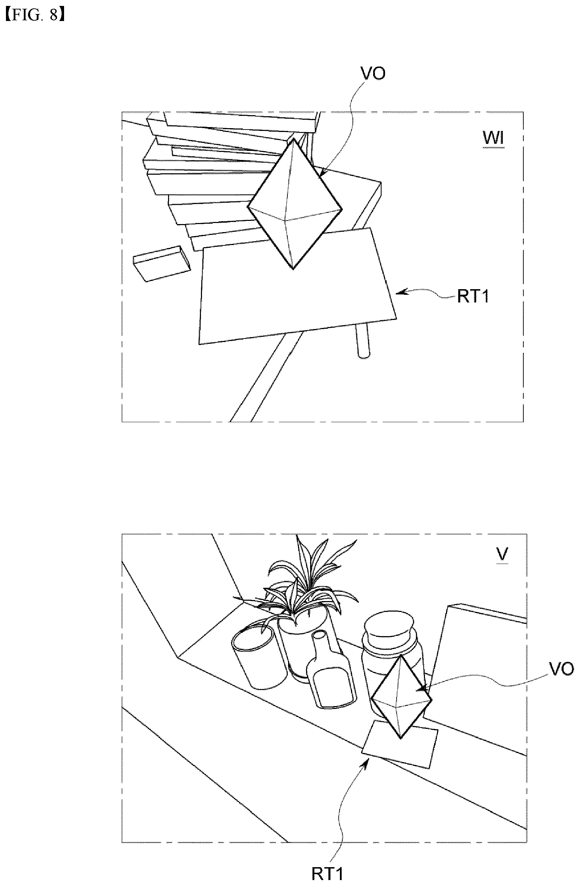

FIG. 8 is an example of a diagram for explaining a method of providing the virtual object authored through the virtual object authoring interface according to one embodiment of the present disclosure.

Specifically, referring to FIG. 8, in one embodiment, the application 111 may augment and display the virtual object VO mapped to the detected reference target RT on the target captured image V, and provide it.

More specifically, in one embodiment, when the target object is detected in the target shooting image V, the application 111 may augment and display the virtual object VO mapped to the corresponding target object based on virtual object mapping information for the detected target object on the corresponding target shooting image V, and provide it.

Alternatively, in one embodiment, when the target spatial coordinates are detected in the target shooting image V, the application 111 may augment and display the virtual object VO mapped to the corresponding target spatial coordinates based on virtual object mapping information for the detected target spatial coordinates on the corresponding target captured image V, and provide it.

In this way, the application 111 can augment and display the virtual object VO authored based on the reference coordinates RC dynamically set in the 3D map at a corresponding position in a target captured image V, thereby implementing a map target more optimized for the authoring and providing of the virtual object VO in a 3D space.

As described above, in the method and system for creating and storing a map target according to the embodiments of the present disclosure, by dynamically setting the reference coordinates RC in a 3D space based on the 3D map based on a target object detected from the 3D map, various functional operations (e.g., virtual object rotation, frame viewpoint switching, etc.) can be executed based on customized coordinates advantageous for performing works such as virtual object authoring on a specific workspace in the 3D space without a separate setting.

In addition, in the method and system for creating and storing a map target according to the embodiments of the present disclosure, by supporting a virtual object authoring operation in the 3D space based on the 3D map based on the dynamically set reference coordinates, it is possible to provide customized coordinates that support various functional operations for the virtual object authoring work to operate more intuitively in the corresponding workspace. Through this, the convenience of the user interface for authoring the virtual object can be improved.

Meanwhile, the embodiments according to the present disclosure described above may be implemented in the form of program instructions that can be executed through various computer components to be recorded on a computer-readable recording medium. The computer-readable recording medium may include program instructions, data files, data structures, etc. alone or in combination. The program instructions recorded on the computer-readable recording medium may be specially designed and configured for the present disclosure, or may be known and available to those skilled in the art of computer software. Examples of the computer-readable recording medium include a hard disk, a floppy disk, a magnetic medium such as a magnetic tape, an optical recording medium such as CD-ROM and DVD, a magneto-optical medium such as a floptical disk, and hardware devices specially configured to store and execute program instructions, such as ROM, RAM, flash memory, and the like. Examples of the program instructions include not only machine language codes generated by a compiler, but also high-level language codes that can be executed by a computer using an interpreter or the like. The hardware device may be modified to one or more software modules to perform processing according to the present disclosure, and vice versa.

Specific implementations described in the present disclosure are examples, and do not limit the scope of the present disclosure in any way. For conciseness of the specification, description of conventional electronic components, control systems, software, and other functional aspects of the systems may be omitted. In addition, the connection of lines or connecting members between the components shown in the drawings represent functional connections and/or physical or circuit connections by way of example, and in actual devices, may be represented by various functional connections, physical connections, or circuit connections, which are replaceable or additional. Further, if a component is described without specific expression such as "essential" or "important", it may not be a component necessarily required for the application of the present disclosure.

In addition, the detailed description of the present disclosure has been described with reference to preferred embodiments of the present disclosure, it will be understood by those skilled in the art or those having ordinary knowledge in the art that the present disclosure may be variously modified and changed without departing from the spirit and the technical scope of the present disclosure described in the claims to be described later. Therefore, the technical scope of the present disclosure is not limited to the contents described in the detailed description of the specification, but should be defined by the claims.

## Claims

1. A method of creating and storing a map target through a map target application executed by at least one processor of a mobile terminal, the method comprising:
creating a 3D map based on an image obtained by photographing a 3D space;
determining an authoring space in which a virtual object authoring work is to be performed based on the created 3D map;
setting reference coordinates based on a target object in the determined authoring space;
providing a virtual object authoring interface for performing the virtual object authoring work based on the set reference coordinates; and
mapping a virtual object authored through the provided virtual object authoring interface to the target object and storing the virtual object mapped to the target object,
wherein the setting of the reference coordinates based on the target object in the authoring space includes:
when the target object is a marker, reading a default coordinate system matching the marker and setting the read default coordinate system as the reference coordinates; and
when the target object is a pixel, detecting a normal vector corresponding to the pixel and determining a Z-axis of the reference coordinates based on the detected normal vector, and determining a X-axis and a Y-axis of the reference coordinates based on the determined Z-axis,
wherein the determining of the X-axis and the Y-axis of the reference coordinates based on the determined Z-axis includes determining the X-axis and Y-axis of the reference coordinates with default X-axis and Y-axis matching the Z-axis, or determining the X-axis and Y-axis of the reference coordinates with preset X-axis and Y-axis depending on a point of viewing the authoring space,
wherein the setting of the reference coordinates based on the target object in the authoring space further includes providing a modification interface for changing at least one of an origin and an axis of the reference coordinates set based on the target object according to a user's input, and
wherein the providing of the modification interface includes providing a modification interface for changing at least one of the X-axis and the Y-axis of the reference coordinates in a state in which the Z-axis of the reference coordinates is fixed.

2. The method of claim 1, further comprising:
acquiring a target shooting image obtained by photographing the 3D space;
detecting the target object in the acquired target shooting image; and
augmenting and displaying a virtual object mapped to the detected target object on the target shooting image.

3. The method of claim 1, wherein the 3D map includes at least one of a point cloud map image representing the 3D space based on a plurality of feature points detected from an image captured by photographing the 3D space, a frame image that is an image corresponding to the point cloud map image, and a point cloud frame image obtained by combining the point cloud map image and the frame image.

4. The method of claim 3, wherein the determining of the authoring space in which the virtual object authoring work is to be performed includes:
setting the authoring space based on a user's input based on at least one of the point cloud map image and the frame image; and
extracting an authoring space image representing the set authoring space.

5. The method of claim 4, wherein the authoring space image includes a plurality of feature points in the point cloud map image corresponding to the authoring space image and descriptor information for each of the feature points.

6. The method of claim 5, wherein the setting of the reference coordinates based on the target object in the authoring space includes:
detecting a marker in the authoring space image as the target object; and
setting a preset coordinate system for the detected marker as the reference coordinates.

7. The method of claim 5, wherein the setting of the reference coordinates based on the target object in the authoring space includes:
acquiring a user's input that selects at least one pixel in the authoring space image as the target object;
setting a center point of the at least one selected pixel as the origin of the reference coordinates; and
setting the Z-axis of the reference coordinates by detecting the normal vector for the at least one pixel based on the descriptor corresponding to the selected at least one pixel.

8. The method of claim 1, further comprising:
mapping and storing the virtual object authored through the provided virtual object authoring interface to 3D spatial coordinates of the 3D map;
acquiring a target shooting image obtained by photographing the 3D space;
detecting the 3D spatial coordinates in the acquired target shooting image; and
augmenting and displaying a virtual object mapped to the detected 3D spatial coordinates on the target shooting image.

9. A system for creating and storing a map target, the system comprising:
at least one display for outputting a 3D map;
at least one memory;
at least one processor; and
at least one application stored in the memory and executed by the processor to create and store a map target,
wherein the at least one application is operated to:
create a 3D map based on an image of a 3D space;
determine an authoring space in which a virtual object authoring work is to be performed based on the created 3D map;
set reference coordinates based on a target object in the determined authoring space;
provide a virtual object authoring interface for performing the virtual object authoring work based on the set reference coordinates; and
map a virtual object authored through the provided virtual object authoring interface to the target object and store the virtual object mapped to the target object,
wherein when the target object is a marker, the at least one application reads a default coordinate system matching the marker and setting the read default coordinate system as the reference coordinates,
wherein when the target object is a pixel, the at least one application detects a normal vector corresponding to the pixel and determines a Z-axis of the reference coordinates based on the detected normal vector, and determines a X-axis and a Y-axis of the reference coordinates based on the determined Z-axis,
wherein the at least one application determines the X-axis and Y-axis of the reference coordinates with default X-axis and Y-axis matching the Z-axis, or determining the X-axis and Y-axis of the reference coordinates with preset X-axis and Y-axis depending on a point of viewing the authoring space,
wherein the at least one application provides a modification interface for changing at least one of an origin and an axis of the reference coordinates set based on the target object according to a user's input, and
wherein the at least one application provides a modification interface for changing at least one of the X-axis and the Y-axis of the reference coordinates in a state in which the Z-axis of the reference coordinates is fixed.
